Europäisches Patentamt

European Patent Office

Office européen des brevets

(19)

(11) Publication number: 0 343 459
A2

# (12) EUROPEAN PATENT APPLICATION

(21) Application number: 89108617.5

(22) Date of filing: 12.05.89

(51) Int. Cl.⁴: C08J 3/00 , C09H 9/00 ,
//C08J9/28

(30) Priority: 24.05.88 JP 126360/88

(43) Date of publication of application:
29.11.89 Bulletin 89/48

(84) Designated Contracting States:
AT BE CH DE ES FR GB GR IT LI LU NL SE

(71) Applicant: TAKEDA CHEMICAL INDUSTRIES,
LTD.
3-6, Doshomachi 2-chome Chuo-ku
Osaka 541(JP)

(72) Inventor: Haze, Akira
4-45, Saiwadainishi 5-chome
Kawanishi Hyogo 666-01(JP)
Inventor: Kimura, Kazatsugu
11-19, Miyanishi 1-chome Harima-cho
Kako-gun Hyogo 675-01(JP)
Inventor: Hashimoto, Koichi
22-25, Kamo 2-chome
Takaishi Osaka 592(JP)

(74) Representative: Lederer, Franz, Dr. et al
Van der Werth, Lederer & Riederer
Patentanwälte Lucile-Grahn-Strasse 22
D-8000 München 80(DE)

(54) Method of dehydrating macromolecular substances.

(57) A hydrophilic macromolecular substance containing a large amount of water can be dehydrated with industrial advantages, which comprises freezing a hydrated gel or hydrated sol of said macromolecular substances and then immersing and thawing the frozen product in a hydrophilic organic solvent.

EP 0 343 459 A2

## Method of Dehydrating Macromolecular Substances

The present invention relates to a method of dehydrating hydrophilic macromolecular substances, specifically to a method of dehydration that is applicable to industry with advantages of obtaining dry products of hydrophilic macromolecular substances from aqueous solutions of said macromolecular substances.

Hydrophilic macromolecular substances utilized in the food industry, chemical industry or other fields are normally commercially available in the form of dry products; a large amount of water must often be removed during the production process of these products. A representative example is the production process in which hydrophilic macromolecular substances produced by microorganisms are collected from fermentation broth and obtained in the form of dry products. For the purpose of dehydration, as seen in the production process for curdlan, for instance, a conventional method has been used in which a fermentation broth, after bacteria removal and neutralization is concentrated to a concentration of several percent, dehydrated and powdered while a several-fold amount of acetone or the like is added, or the concentrate is dried by spray drying (Japanese Published Examined Patent Application No.32673/1973). Similarly, for plant- or animal-derived hydrophilic macromolecular substances, as seen in the production process for dry agar or dry gelatin, starting materials are subjected to extraction with a large amount of water, and then dehydrated and subjected to thawing by freezing or evaporation-concentration-drying.

To obtain dry products of hydrophilic macromolecular substances, the above-mentioned methods have been used; however, much remains to be improved in production process and product quality. For example, when dehydrating a curdlan concentrate using ethanol by the method of Japanese Published Examined Patent Application No. 32673/1973 or U.S. Patent 3,822,250 dehydrating a 4% concentrate in the presence of a 4-fold amount of ethanol yields a dehydrated product of a solid content of at most 20%, thus requiring long drying time to obtain a dry product. This leads to an increase in drying load and some quality drawbacks; for example, nothing more than unflexible dry powder is obtained, which is difficult to handle due to a lack of hydrophilicity. In addition, the spray dry method cannot be regarded as an industrially advantageous method, since the drying load is great because it cannot be carried out at high concentrations as with ordinary low-molecular substances. Similar problems also arise in obtaining dry products of other hydrophilic macromolecular substances.

In light of these conditions, the present inventors conducted investigations on industrially advantageous methods of obtaining dry products of hydrophilic macromolecular substances, and found that it is easily possible to remove a large amount of water contained in a hydrated gel or hydrated sol of a hydrophilic macromolecular substance by freezing it and then immersing and thawing it in a hydrophilic organic solvent. The present inventors conducted further investigations based on this finding, and developed the present invention.

Accordingly, the present invention is a method of dehydrating hydrophilic macromolecular substances characterized in that a hydrated gel or hydrated sol of said macromolecular substances is frozen and then immersed and thawed in a hydrophilic organic solvent.

The present method, which provides a means of removing water from a system comprising a relatively large amount of water and a hydrophilic macromolecular substance, is widely applicable to obtaining dry products of hydrophilic macromolecular substances. There is no particular limitation on the type of macromolecular substance, as long as it forms hydrated gel or hydrated sol; the present invention is applicable even to synthetic hydrophilic macromolecular substances, as well as microbe-, animal-, or plant-derived natural hydrophilic macromolecular substances. Examples include microbe-derived substances such as curdlan and xanthane gum; plant-derived substances such as agar, furcelan, carrageenan, arginic acid and other marine algal polysaccharides, guar gum, tragacanth gum and other plant seed gums, pectins; and animal-derived substances such as gelatin. As examples of synthetic hydrophilic macromolecular substances, mention may be made of dextran, polyacrylic acid, polyacrylamide, carboxymethylcellulose and methylcellulose. These hydrophilic macromolecular substances are used as thickeners, binders, gelating agents or stabilizers in the food industry, chemical industry and other fields.

The ratio of water and hydrophilic macromolecular substance in hydrated gel or hydrated sol is variable over the range 0.2 to 300~500 parts by weight of water to 1 part by weight of macromolecular substances. Specifically, an appropriate weight ratio is chosen according to the type of the subject hydrophilic macromolecular substance and conditions of its production. For instance, for curdlan, gelatin, agar, and furcelan, the present invention is applicable to hydrated gels or hydrated sols containing water at a ratio of about 10 to 50 parts by weight to 1 part by weight of these substances.

A hydrated gel or hydrated sol involved in the present invention means a hydrated gel or hydrated sol normally used in the colloid preparation field dealing with macromolecular substances. Accordingly, hydrated gel is defined as a water-containing solid resulting from formation of a reticular structure due to the interaction between a hydrophilic macromolecular substance and water; it is also called jelly. Hydrated sol is defined as the state of a system comprising a hydrophilic macromolecular substance and water, which is not as solid as hydrated gel but which has some degree of fluidity. Sol and gel may be convertible to each other or take an intermediate state. For example, in the case of curdlan, microorganisms are cultivated in medium to produce and accumulate curdlan by the method of Japanese Published Examined Patent Application No. 32673/1973 or U.S. Patent 3,822,250; the curdlan is then alkalified and dissolved, followed by cells removal and neutralization with acid to precipitate curdlan. In this case, curdlan and water bind together with a relatively strong bonding force, and curdlan is obtained in the form of a fluid hydrated sol. The present invention can be used to dehydrate this hydrated sol. On the other hand, hydrated sol of curdlan is known to form thermoreversible gel when heated to about 60 to 80°C and thermoirreversible gel at temperatures exceeding 80°C. The present invention can be applied to these gels. It is possible to obtain a hydrated gel or hydrated sol of agar, carrageenan and other marine algae polysaccharides, gelatin etc. by subjecting them to heating extraction with water and cooling the resulting extract. For carboxymethylcellulose, a hydrated sol can be obtained by immersing sulfite pulp in an aqueous solution of sodium hydroxide to convert it to alkali cellulose, which is blended with sodium chloroacetate to yield the desired hydrated sol.

The hydrated gel or hydrated sol thus prepared is frozen. Neither the freezing temperature nor freezing method is subject to any particular limitation, as long as they serve the purpose of freezing the water in the hydrated gel or hydrated sol. Generally, dehydration is facilitated when freezing temperature is -1 to -100°C, preferably -5 to -30°C, with a freez ing zone passage time of 5 minutes to 24 hours, preferably 1 to 2 hours. Any appropriate means of freezing can be used, including indirect freezing methods such as with air blast or brine, and direct freezing methods such as with liquid nitrogen, liquid oxygen or dry ice.

The frozen gel or sol may take any form, including a cube, sphere, rod and cylinder. In the present invention, it is possible to maintain the form of the frozen gel or sol even after dehydration using a hydrophilic organic solvent; any form can be chosen in view of desired product form. When it is desired to obtain a dehydrated dry product in the form of powder or grains, the frozen product may be subjected to an immersion-thawing process using a hydrophilic organic solvent while or after being pulverized.

Any hydrophilic organic solvent can be used for the present invention, as long as it is miscible with water and has water solubility exceeding 25%. Hydrophilic organic solvents with higher solubilities are more advantageous for actual application, since their consumption decreases as the solubility increases. In removing the organic solvent when drying after dehydration, it is preferable that the organic solvent have a boiling point lower than that of water. Examples of such hydrophilic organic solvents include alcohols such as methyl alcohol, ethyl alcohol and propyl alcohol; and ketones such as acetone and ethyl methyl ketone. Acetonitrile can also be used. In particular, methyl alcohol, ethyl alcohol, isopropyl alcohol and acetone are preferable.

The amount of hydrophilic organic solvent required to immerse the frozen product therein varies with the water solubility of the organic solvent as well. For example, it is recommended to use a hydrophilic organic solvent at a ratio exceeding 0.5 parts by volume to 1 part by weight of the frozen product for highly hydrophilic organic solvents such as methyl alcohol, ethyl alcohol or acetone, or 2 parts by volume to 1 part by weight of the frozen product for less hydrophilic organic solvents such as methyl ethyl ketone. Although there is no particular upper limit on the amount of solvent used, the minimum amount should be such that the water in the frozen product is sufficiently miscible; the use of excess amounts is disadvantageous for cost control. For example, for acetone, methanol and ethanol, the desired dehydrating efiect of the present invention can be obtained with less than 2-fold amounts per part by weight of the frozen product. It should be noted, however, that industrial operation is facilitated in some cases by repeatedly immersing a given amount of the frozen product in a large amount of hydrophilic organic solvent. The temperature at which the frozen product is immersed and thawed in hydrophilic organic solvent is normally over 5°C; any maximum temperature can be chosen in view of the thermal stability of the hydrophilic macromolecular substance, as long as it does not cause thermal denaturation or other deterioration. For example, hydrated gel of curdlan is known to form a thermoirreversible gel when heated over 80°C. When it is desired to obtain a dehydrated product that gelates on heating, it is normally preferable to conduct the immersion-thawing process below this temperature. For hydrated gel of agar, gelatin etc., it is advantageous for operational procedures to conduct the immersion-thawing process below the gel's melting temperature. Normally, temperatures in the range of 5 to 40°C are widely applicable to the immersion-thawing process for any hydrophilic macromolecular substance.

This immersion thaws the frozen product of hydrated gel or hydrated sol; the melted water and hydrophilic organic solvent mix together. Immersion is continued until complete mixing is reached; relatively gentle agitation is effective. Following the immersion-thawing process, solid-liquid separation is conducted to yield a dehydrated product of the hydrophilic macromolecular substance. The major feature of the present invention is that solid-liquid separation can very easily be achieved to yield a dehydrated product containing a high concentration of hydrophilic macromolecular substance, despite the smaller amount of hydrophilic organic solvent in comparison to conventional solvent dehydration methods. Solid-liquid separation can, for example, be achieved by a routine procedure of centrifugal dehydration using a basket centrifuge; a dehydrated product with solid content exceeding 30% can thereby easily be obtained. Used organic solvent may be recovered by distillation and recovered solvent be recycled to use in a next process.

The residual water and hydrophilic organic solvent can be removed from the dehydrated product by an ordinary procedure of air drying or vacuum drying. The drying time is shorter than that required to dry a dehydrated product obtained by a conventional solvent dehydration method; this aspect also provides an advantage for the present invention. The obtained dehydrated product may be subjected, as needed, to further dehydration to remove the residual water using another hydrophilic organic solvent.

Sometimes it is desired to remove the hydrophilic organic solvent instead of water during drying of the dehydrated product; this can be accomplished by use of a hydrophilic organic solvent with a boiling point lower than that of water.

The dry product thus obtained has a porous structure. The dry product may be pulverized to coarse grains (e.g. 200 to 2,000 $\mu$m) or fine grains (e.g. 30 to 200 $\mu$m) according to desired use; the capability of very easy pulverization of the obtained dry product is also one of the advantages of the present invention.

The present invention can be industrially utilized with advantages as a means of obtaining dehydrated, dry products of a hydrophilic macromolecular substance from a system comprising a relatively large amount of water and said macromolecular substance. Accordingly, the present invention yields high quality dehydrated, dry products that, in comparison to those obtained by conventional methods, have smaller drying load, are easier to pulverize and contain lower levels of impurities such as ash. Since heat applied during the drying process is not severe, almost no quality degradation occurs, or, if any, very slight degradation.

The present invention is described in more detail by means of the following working examples.

## Example 1

A curdlan fermentation broth (containing about 4% w/v curdlan) obtained by a standard method was diluted with water to 1.6%. This dilution was adjusted to a concentration of 0.4 N sodium hydroxide by the addition of a 30% aqueous solution of sodium hydroxide, and then subjected to 4-hr agitation to dissolve the curdlan, followed by centrifugation at 8,000$^G$ for 10 minutes to remove bacteria.

The resulting bacteria-free solution was adjusted to pH 6.5 with 4 N hydrochloric acid; a solution of curdlan hydrated sol was prepared. This hydrated sol solution was diluted with water to a curdlan concentration of 0.5% and centrifuged at 8,000$^G$ for 10 minutes for desalting and concentration. The resulting concentrate (containing about 3% curdlan) was diluted to 0.5% and centrifuged under exactly the same conditions as above to yield a desalted, concentrated hydrated sol containing about 4% curdlan. 100 g of this hydrated sol of 4% curdlan was dehydrated and dried by one of the following methods ((1) or (2)).

Method (1)

To the hydrated sol of curdlan was added a 2- or 4-fold amount (volume/weight) of ethanol, followed by agitation for about 30 minutes. This mixture was then centrifuged at 750$^G$ in a compact basket centrifuge to yield a dehydrated product, which was then vacuum-dried at 60° C.

Method (2)

The hydrated sol of curdlan was frozen in a freezer at -20° C. The resulting frozen product was immersed and thawed in a 1-, 1.5-, 2-, or 4-fold amount (volume/weight) of ethanol at room temperature. The resulting slurry was dehydrated by centrifuge and vacuum-dried at 60° C in the same manner as in Method (1).

Dehydrated product concentration, drying time required, and physical properties of the dry products obtained by the above methods are shown in Table 1.

## Table 1

| Method | Method (1) | | Method (2) | | | |
|---|---|---|---|---|---|---|
| Volumes Ethanol | 2 | 4 | 1 | 1.5 | 2 | 4 |
| Dehydrated product concentration (%) | 18 | 20 | 23 | 29 | 34 | 38 |
| Drying time required (hr) | 12 | 10 | 6 | 5 | 4 | 3 |
| Dry product physical properties: Water content (%) | 5 | 5 | 6 | 6 | 5.5 | 5 |
| Ash content (%) | 3 | 2.5 | 2 | 1 | 0.8 | 0.7 |
| Gel strength* $(g/cm^2)$ | 900 | 900 | 900 | 920 | 950 | 960 |
| Morphology | Platy | Platy | Flaky | Flaky | Flaky | Flaky |
| Color | Light brown | Light brown | Grayish white | Grayish white | Grayish white | Grayish white |
| Porosity | None | None | Porous | Porous | Porous | Porous |

*: Determined using a curd tension meter on a thermally solidified gel of 2% concentration.

As is evident from the results shown in Table 1, Method (2) (method of the present invention), in comparison to Method (1) (control method), yielded higher concentrations of dehydrated products with smaller amounts of ethanol, and required shorter drying time. In addition, the dry products obtained by Method (2) were porous and had a good appearance due to the mild thermal history. Because of their porosity, the dry products of Method (2) were easily pulverizable; pulverization yielded white powder that was immiscible with water and thus easy to handle.

Example 2

100 g of each frozen hydrated sol of curdlan obtained by the methods described in Example 1 was immersed and thawed in each organic solvent shown in Table 2, and centrifuged in a 750$^G$ compact basket centrifuge to yield a dehydrated product, which was then vacuum-dried at 60°C to yield a dry product of curdlan. Dehydrated product concentration, drying time required and physical properties of the dry products obtained by this method are shown in Table 2.

## Table 2

| Solvent | Ethyl Alcohol | Methyl Alcohol | Isopropyl Alcohol | n-Propanol | Dimethyl Ketone | Methyl Ethyl Ketone | Acetonitrile |
|---|---|---|---|---|---|---|---|
| Amount of Solvent Added (m$\ell$) | 200 | 200 | 200 | 200 | 200 | 600 | 200 |
| Dehydrated product concentration (%) | 34 | 33 | 32 | 43 | 40 | 30 | 43 |
| Drying time required (hr) | 4 | 4 | 4 | 3 | 3 | 5 | 3 |
| Dry product physical properties: Water content (%) | 6 | 6 | 6 | 5 | 4 | 6 | 4 |
| Ash content (%) | 0.8 | 0.8 | 0.8 | 0.8 | 0.8 | 0.5 | 0.8 |
| Gel strength (g/cm$^2$) | 950 | 940 | 890 | 910 | 900 | 900 | 870 |
| Morphology | Flaky | Flaky | Flaky | Flaky | Flaky | Almost flaky | Flaky |
| Color | Grayish white | Grayish white | Grayish white | Grayish white | Grayish white | Grayish white | Grayish white |

As is evident from Table 2, curdlan dehydration and drying were possible regardless of the hydrophilic organic solvent was used. In other words, an effect almost equivalent to that of ethyl alcohol was obtained by the use of any one of the hydrophilic organic solvents; methyl alcohol, isopropyl alcohol, n-propanol, dimethyl ketone and acetonitrile. It was also possible to use methyl ethyl ketone, though a larger amount was needed.

Example 3

100 g of the dehydrated sol containing about 4% curdlan obtained as directed in Example 1 was subjected to air blast freezing, brine (indirect) contact freezing, liquid nitrogen contact freezing or dry ice contact freezing. Each resulting frozen product was immersed and thawed in a 2-fold amount (volume/weight) of ethanol and dehydrated using a 750$^G$ compact basket centrifuge, followed by vacuum-drying at 60° C to yield a dry prodcut of curdlan. Data on various characteristics of the dehydrated products obtained by the above freezing methods are shown in Table 3.

Table 3

| Freezing method | Air blast | Indirect (brine) contact | | | | Direct contact | |
|---|---|---|---|---|---|---|---|
| | −20°C | −5°C | −10°C | −15°C | −20°C | Liquid nitrogen | Dry ice |
| Freezing time (hr) | 6 | 3 | 2 | 1.5 | 1 | 0.5 | 1 |
| Duration of freezing (min) | 240 | 120 | 90 | 60 | 30 | 5 | 30 |
| Dehydrated product con-centration (%) | 34 | 32 | 34 | 35 | 32 | 25 | 30 |
| Drying time required (hr) | 4 | 4 | 4 | 4 | 4 | 5 | 4 |
| Dry product physical prop-erties: Water content (%) | 6 | 5.8 | 5.5 | 7 | 6 | 8 | 7 |
| Ash content (%) | 0.8 | 0.8 | 0.8 | 0.7 | 0.8 | 0.9 | 0.8 |
| Gel strength (g/cm$^2$) | 950 | 980 | 920 | 930 | 900 | 890 | 840 |
| Morphology | Flaky | Flaky | Flaky | Flaky | Flaky | Slightly shrunk, flaky | Flaky |

As is evident from the results shown in Table 3, any freezing method was applicable, but when the freezing period was short (liquid nitrogen freezing method), dehydrated product concentration decreased and the dry product became harder. It is therefore more advantageous to conduct freezing so that the freezing period exceeds 5 minutes.

## Example 4

100 g of the frozen product of hydrated sol of curdlan obtained as directed in Example 1 was immersed and thawed in a 2-fold amount (volume/weight) of ethyl alcohol at room temperature or at 30°C, 40°C, 50°C or 60°C in a warm water tank. After dehydration using a basket centrifuge, vacuum drying was conducted at 60°C to yield dry products of curdlan. Data on various characteristics of the dry products obtained by this method are shown in Table 4.

### Table 4

| Thawing conditions | Room temperature thawing | Warm water tank thawing | | | |
|---|---|---|---|---|---|
| | 20°C | 30°C | 40°C | 50°C | 60°C |
| Thawing time required (min) | 120 | 60 | 36 | 18 | 12 |
| Dehydrated product concentration (%) | 34 | 36 | 36 | 34 | 35 |
| Drying time required (hr) | 4 | 4 | 4 | 4 | 4 |
| Dry product physical properties: Water content (%) | 6 | 6 | 6.2 | 6.5 | 6.2 |
| Ash content (%) | 0.8 | 0.8 | 0.8 | 0.8 | 0.8 |
| Gel strength (g/cm$^2$) | 950 | 980 | 920 | 940 | 700 |
| Morphology | Flaky | Flaky | Flaky | Flaky | Flaky |

As is evident from the results shown in Table 4, favorable dehydration was achieved, resulting in high quality dry products, by immersion-thawing at room temperature or at 30 to 50°C. At 60°C, however, there was a tendency toward a slight decrease in gel strength.

## Example 5

100 g of an aqueous dispersion (2%) of each of agar, carrageenan, gelatin, pectin, xanthane gum, guar gum and carboxymethylcellulose was prepared and heated at 60°C for 30 minutes for dissolution or dispersion, after which it was gelated (or solated) by water cooling. Resulting gel or sol was placed in a freezer at -20°C to obtain a frozen product. This frozen product was immersed and thawed in a 2-fold amount (volume/weight) of ethanol at room temperature, and then dehydrated using a 750$^G$ compact basket centrifuge and vacuum-dried at 60°C to yield a dry product. Dehydrated product concentration, drying time required and water content of the dry products obtained are shown in Table 5.

## Table 5

| Subject substance | Agar | Carrageenan | Gelatin | Pectin | Xanthane gum | Guar gum | Carboxymethylcellulose |
|---|---|---|---|---|---|---|---|
| Dehydrated product concentration (%) | 34 | 30 | 43 | 35 | 25 | 48 | 35 |
| Drying time required (hr) | 2 | 2.5 | 5 | 2 | 6 | 2 | 3 |
| Dry product water content (%) | 6 | 6 | 8 | 7 | 6 | 4 | 4 |
| Dry product appearance | Porous film | Porous film | Porous gum | Porous, flaky | Porous, flaky | Porous, flaky | Porous, flaky |

As demonstrated by the results shown in Table 5, favorable dehydration and drying was achieved for each of the hydrophilic macromolecular substances capable of gel formation.

### Example 6

To each of 0.5 g of polyacrylic acid (tradename: Acrihope, produced by Nippon Shokubai Kagaku) and 20 g of dextran (tradename: Sephadex G-10), water was added to make 100 mℓ; each mixture was gelated. Separately, water was added to 7 g of acrylamide to make 100 mℓ, followed by light irradiation by a standard method to yield a polyacrylamide gel. Each resulting gel was left in a freezer at -20 °C to obtain a frozen product.

Each frozen product was immersed and thawed in a 2-fold amount (volume/weight) of ethanol at room temperature, and then dehydrated using a 750 $^G$ compact basket centrifuge and vacuum-dried at 60 °C to yield a dry product. Dehydrated product concentration, drying time required and water content of the dry products thus obtained are shown in Table 6.

Table 6

| Subject substance | Polyacrylic acid (tradename: Acrihope) | Dextran (tradename: Sephadex G-10) | Polyacrylamide (acrylamide-polymerized gel) |
|---|---|---|---|
| Dehydrated product concentration (%) | 90 | 50 | 60 |
| Drying time (hr) | 3 | 5 | 4 |
| Dry product water content (%) | 5 | 6 | 6 |
| Dry product appearance | Original grain form, with good restoration | Original grain form | Flaky |

Example 7

1) The frozen product (100g) of curdlan, which was obtained in the same method as in method (2) of Example 1, was immersed and thawed in 200 ml of methanol at room temperature for 2 hours. The resulting slurry was centrifuged in a 750$^G$ compact basket centrifuge to yield a dehydrated product, which was then vacuum-dried at 60°C to yield a dry product of curdlan.

2) The dehydrated product, which was obtained in the same method as in the above-method 1), was further immersed in 200 ml of methanol. The resulting slurry was centrifuged in 750$^G$ compact basket centrifuge, followed by vacuum-drying at 60°C to yield a dry product of curdlan. The recovered mother liquor containing about 98% v/v of methanol can be reused as the solvent in the above-process 1).

Table 7

| | Method 1) | Method 2) |
|---|---|---|
| Dehydrated product weight (g) solid matter (%) | 16 33 | 10 50 |
| Drying time required (hr.) | 4 | 1 |
| Dry product properties: water content (%) ash content (%) gel strength (g/cm$^2$) color appearance | 6 0.8 940 91 Grayish white powder | 2 0.07 935 92 White powder |

**Claims**

1. A method of dehydrating hydrophilic macromolecular substances, which comprises freezing a hydrated gel or hydrated sol of hydrophilic macromolecular substances and then immersing and thawing the resulting frozen substances in a hydrophilic organic solvent.

2. The method according to claim 1, wherein the hydrophilic macromolecular substances are microbe-, animal-, or plant-derived natural hydrophilic macromolecular substances.

3. The method according to claim 2, wherein the microbe-derived natural hydrophilic macromolecular substance is curdlan or xanthane gum.

4. The method according to claim 2, wherein the animal-derived natural hydrophilic macromolecular substance is gelatin.

5. The method according to claim 2, wherein the plant-derived natural hydrophilic macromolecular substance is agar, carrageenan or pectin.

6. The method according to claim 1, wherein the hydrophilic organic solvent has water solubility exceeding 25%.

7. The method according to claim 1, wherein the hydrophilic organic solvent is methyl alcohol, ethyl alcohol, isopropyl alcohol or acetone.

8. The method according to claim 1, wherein the ratio of water and hydrophilic macromolecular substance in hydrated gel or hydrated sol is a range of 10 to 500 parts by weight of water to 1 part by weight of macromolecular substances.

9. The method according to claim 1, wherein the freezing temperature is -1 to -100°C.

10. The method according to claim 1, wherein the amount of hydrophilic organic solvent is more than 0.5 parts by volume to 1 part by weight of the frozen substance